(19) Europäisches Patentamt / European Patent Office / Office européen des brevets

(11) **EP 2 410 211 A1**

(12) **EUROPEAN PATENT APPLICATION**
published in accordance with Art. 153(4) EPC

(43) Date of publication:
   **25.01.2012 Bulletin 2012/04**

(51) Int Cl.:
   **F16H 61/14** (2006.01)    **F16K 11/07** (2006.01)
   **F16K 31/06** (2006.01)

(21) Application number: **10820089.0**

(22) Date of filing: **16.09.2010**

(86) International application number:
   **PCT/JP2010/005667**

(87) International publication number:
   **WO 2011/039963 (07.04.2011 Gazette 2011/14)**

(84) Designated Contracting States:
   **AL AT BE BG CH CY CZ DE DK EE ES FI FR GB GR HR HU IE IS IT LI LT LU LV MC MK MT NL NO PL PT RO SE SI SK SM TR**

(30) Priority: **29.09.2009 JP 2009224211**
           **17.03.2010 JP 2010060570**

(71) Applicant: **Aisin AW Co., Ltd.**
   **Fujii-cho**
   **Anjo-shi**
   **Aichi 444-1192 (JP)**

(72) Inventors:
   • **SUGIURA, Hironori**
     **Anjo-shi**
     **Aichi 444-1192 (JP)**
   • **KOKUBU, Takahiro**
     **Anjo-shi**
     **Aichi 444-1192 (JP)**

   • **NAKAI, Masaya**
     **Anjo-shi**
     **Aichi 444-1192 (JP)**
   • **SHIMIZU, Tetsuya**
     **Anjo-shi**
     **Aichi 444-1192 (JP)**
   • **HYODO, Yoshimitsu**
     **Anjo-shi**
     **Aichi 444-1192 (JP)**
   • **KOJIMA, Kazuki**
     **Anjo-shi**
     **Aichi 444-1192 (JP)**
   • **ISHIKAWA, Kazunori**
     **Anjo-shi**
     **Aichi 444-1192 (JP)**

(74) Representative: **TBK**
   **Bavariaring 4-6**
   **80336 München (DE)**

(54)    **HYDRAULIC CONTROL DEVICE FOR AUTOMATIC TRANSMISSION**

(57)    A circulation pressure is supplied to a starting device (2), and a working pressure that engages and disengages a lockup clutch (3) by the difference from the circulation pressure is regulated by a linear solenoid valve (10). A spool portion ($12_1$) of the linear solenoid valve ($10_1$) is provided with a first feedback oil chamber (12b) for feeding back the working pressure to a spool (12p), and a second feedback oil chamber (12a) for feeding back the circulation pressure to the spool (12p) in the direction opposite to that of the first feedback oil chamber (12p). A pressure-receiving area (A1 - A2) of the first feedback oil chamber (12b) and a pressure-receiving area (A1 - A2) of the second feedback oil chamber (12a) are set equal to each other in the spool (12p). Thus, an oil pressure acting force of the working pressure of the first feedback oil chamber and that of the circulation pressure of the second feedback oil chamber can be equal to each other, whereby engagement/disengagement control and slip control of the clutch can be accurately performed.

FIG.1

**Description**

TECHNICAL FIELD

The present invention relates to a hydraulic control device of an automatic transmission that is mounted on, e.g., a vehicle, and more particularly to a hydraulic control device of an automatic transmission which regulates a working pressure that engages and disengages a clutch by the difference from a circulation pressure of a starting device, by using a pressure-regulating solenoid valve.

BACKGROUND ART

In recent years, an automatic transmission mounted on, e.g., a vehicle, has been becoming common including a hydraulic power transmission device such as a torque converter, and also including a lockup clutch for locking up the hydraulic power transmission device in order to reduce transmission loss in the hydraulic power transmission device. Engagement/disengagement control and slip control of this lockup clutch are performed based on the difference between a circulation pressure $P_{CIR}$ of oil that circulates as a working fluid of the hydraulic power transmission device (an on-pressure $P_{ON}$ that acts on the engaging side), and a working pressure $P_{APP}$ that is electronically controlled (an off-pressure $P_{OFF}$ that acts on the disengaging side).

In related art, the working pressure $P_{APP}$ is generated by a control valve that is controlled by an output pressure of a linear solenoid valve that uses, e.g., a modulator pressure, namely a line pressure controlled to a constant pressure (alternatively, the line pressure or a secondary pressure) as a source pressure. With recent improvement in output performance of linear solenoid valves, however, such a device is proposed that uses the output pressure of the linear solenoid valve as it is as the working pressure $P_{APP}$ (see Patent Document 1). This eliminates the need for the control valve, and enables a more compact hydraulic control device to be implemented.

[Related Art Document]

[Patent Document]

[Patent Document 1] Japanese Patent Application Publication No. JP-A-2006-242347

DISCLOSURE OF THE INVENTION

[Problem to be Solved by the Invention]

In such a device that regulates the working pressure $P_{APP}$ by the linear solenoid valve, the circulation pressure $P_{CIR}$ is input as a feedback pressure to an oil chamber (120) provided in the linear solenoid valve, and the working pressure $P_{APP}$ that is output is input as a feedback pressure to an oil chamber (122) provided on the opposite side via a spool (114).

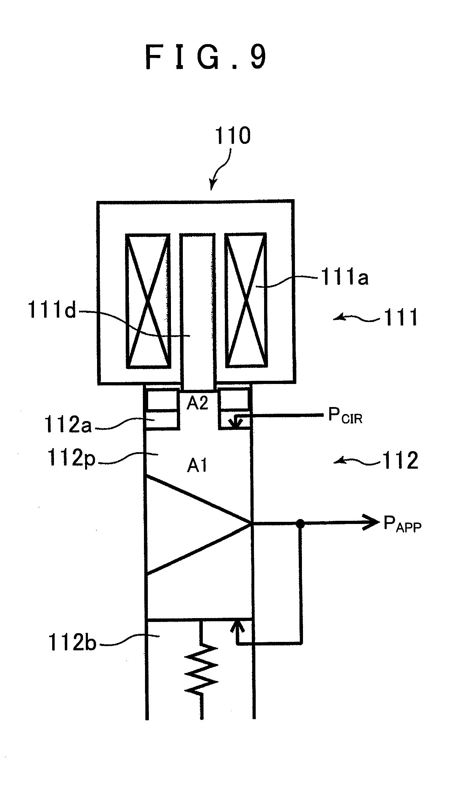

However, as shown in FIG. 9, a linear solenoid valve 110 is formed by a solenoid portion 111 and a valve portion 112, and a protruding portion on which a plunger 111 d driven by a coil 111a abuts needs be formed in a spool 112p of the valve portion 112. That is, a pressure-receiving area of an oil chamber 112a is a pressure receiving area obtained by subtracting an area A2 of the protruding portion from a pressure-receiving area A1 of the oil chamber 112b (A1 - A2).

Thus, the relation between a feedback force of the oil chamber 112a that receives the circulation pressure $P_{CIR}$ and a feedback force of the oil chamber 112b that receives the working pressure $P_{APP}$ is represented by the following expression.

$$\Delta P_{APP} = (A1 - A2)/A1 \bullet \Delta P_{CIR} \qquad \dots (1)$$

On the other hand, if a large driving force is transmitted from an engine to the torque converter while the vehicle is stopped or is moving at a low speed such as when the vehicle is started on an uphill road or the like, large differential rotation is produced between a pump impeller that rotates at the engine speed, and a turbine runner whose rotation is stopped. Thus, a phenomenon tends to occur that the internal pressure in the torque converter first increases due to stirring of oil, and then decreases rapidly.

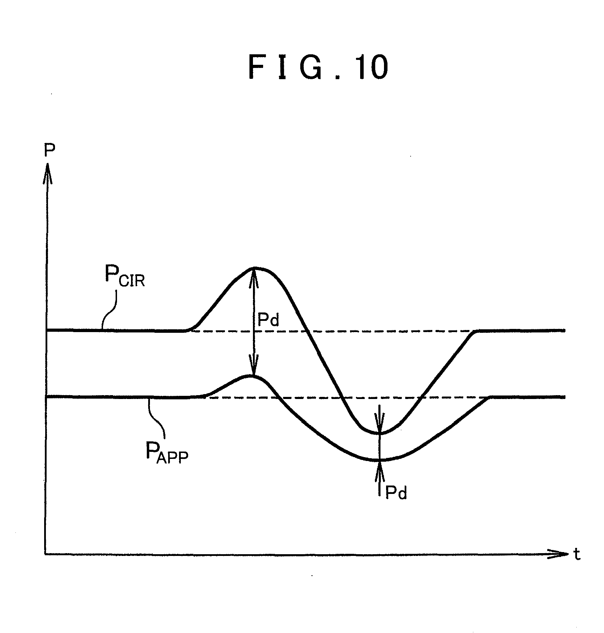

That is, when the vehicle is started or the like, as shown in FIG. 10, the circulation pressure $P_{CIR}$ varies so as to first increase and then decrease rapidly. However, since the working pressure $P_{APP}$ that is output from the linear solenoid valve 110 is "(A1 - A2)/A1 < 1," the working pressure $P_{APP}$ varies less than the circulation pressure $P_{CIR}$, based on the above expression (1), whereby the difference Pd between the circulation pressure $P_{CIR}$ and the working pressure $P_{APP}$ may increase and decrease. Thus, the linear solenoid valve 110 described in Patent Document 1 may not be able to maintain the differential pressure Pd at an intended value when the circulation pressure varies.

In particular, in recent years, a device is proposed without the hydraulic power transmission device such as the torque converter, which enables starting of the vehicle while slip-controlling a starting clutch. In such a device, however, the circulation pressure of the starting clutch varies upon such starting of the vehicle as described above, and thus the differential pressure of the starting clutch may not be maintained at an intended value, which may cause shocks or vibrations upon starting of the vehicle.

Thus, it is an object of the present invention to provide a hydraulic control device of an automatic transmission which is capable of accurately performing engagement/disengagement control and slip control of a clutch even if a circulation pressure varies.

[Means for Solving the Problem]

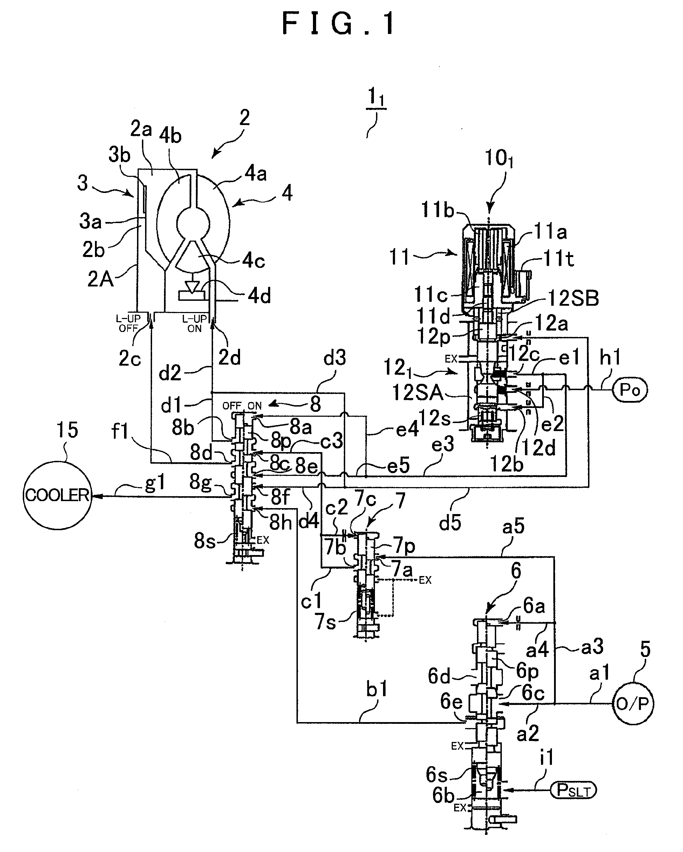

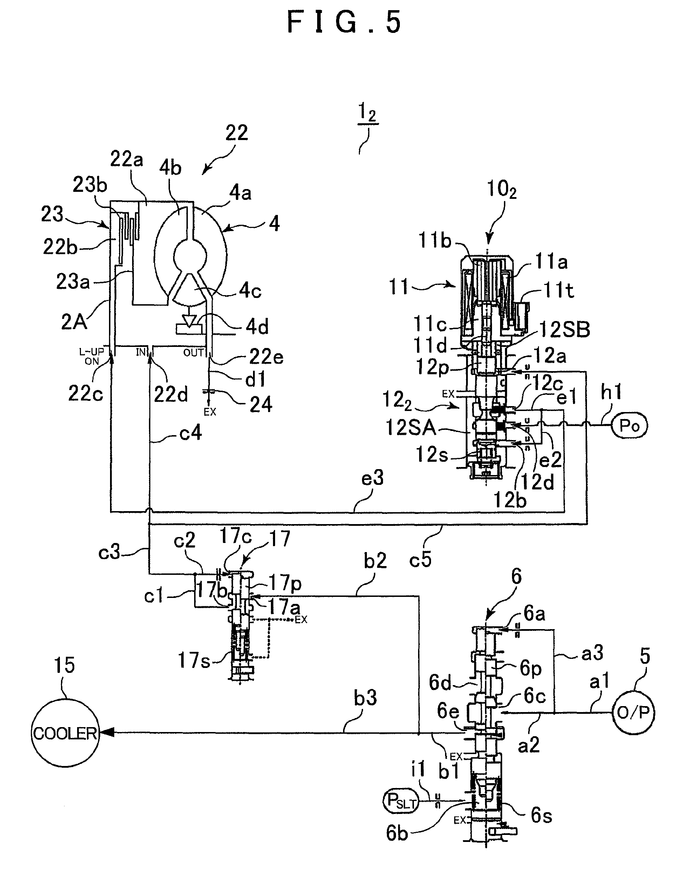

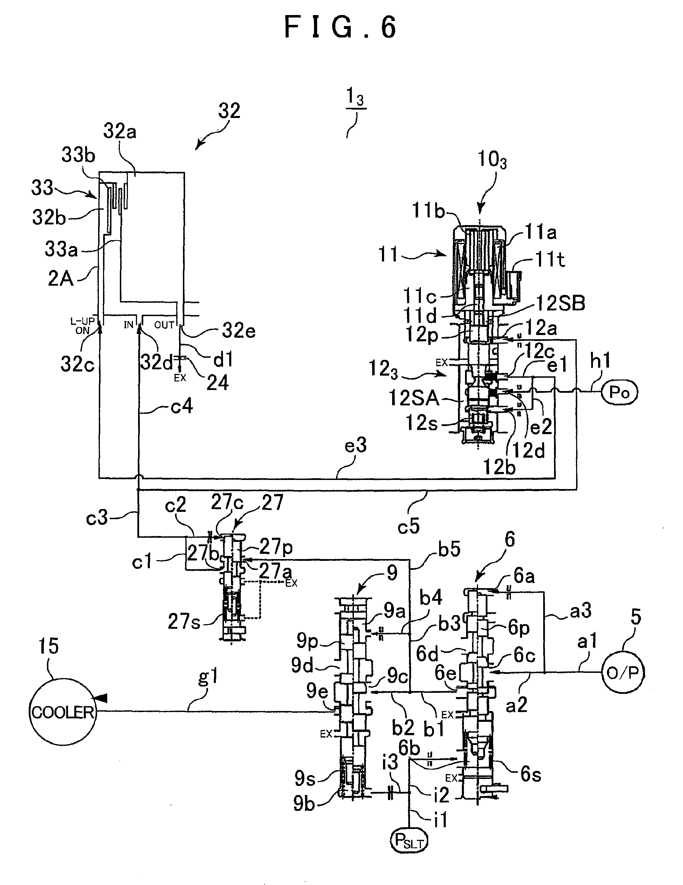

According to the present invention (see, e.g., FIGS. 1 to 6), a hydraulic control device ($1_1$, $1_2$, $1_3$) of an automatic transmission (AT) includes: a circulation pressure supply portion (6, 7 in FIG. 1; 6, 17 in FIG. 5; and 6, 9, 27 in FIG. 6) for supplying a circulation pressure ($P_{CIR}$) to a starting device (2, 22, 32) having a clutch (3, 23, 33) capable of enabling and disabling power transmission between a driving source (EG) and an automatic speed change mechanism (40); and a pressure-regulating solenoid valve ($10_1$ to $10_5$) capable of regulating a working pressure ($P_{APP}$) that engages and disengages the clutch (3, 23, 33) by a difference from the circulation pressure ($P_{CIR}$), wherein the pressure-regulating solenoid valve ($10_1$ to $10_5$) has a solenoid portion (11) that is driven electrically, and a spool portion ($12_1$ to $12_5$) including a spool (12p) that is drivingly pressed by the solenoid portion (11). The hydraulic control device ($1_1$, $1_2$, $1_3$) is **charac- terized in that** the spool portion ($12_1$ to $12_5$) includes a first feedback oil chamber (12b) for feeding back the working pressure ($P_{APP}$) to the spool (12p), and a second feedback oil chamber (12a) for feeding back the circulation pressure ($P_{CIR}$) to the spool (12p) in a direction opposite to the first feedback oil chamber (12b), and a pressure-receiving area (A1 - A2) of the first feedback oil chamber (12b) and a pressure-receiving area (A1 - A2) of the second feedback oil chamber (12a) are set equal to each other in the spool (12p).

The present invention (see, e.g., FIGS. 1 and 5) is **characterized in that** the starting device (2, 22) includes a hydraulic power transmission device (4) for performing the power transmission between the driving source (EG) and the automatic speed change mechanism (40) via a fluid, and the clutch is a lockup clutch (3, 23).

Specifically, the present invention (see, e.g., FIGS. 5 and 6) is characterized by further including: a circulation pressure supply oil passage (c4) for supplying the circulation pressure ($P_{CIR}$) from the circulation pressure supply portion (6, 17 in FIG. 5; and 6, 9, 27 in FIG. 6) to a circulation pressure supply port (22d, 32d) of the starting device (22, 32); a circulation pressure discharge oil passage (d1) for discharging the circulation pressure ($P_{CIR}$) in the starting device (22, 32) from a circulation pressure discharge port (22e, 32e) of the starting device (2, 22); a working pressure supply oil passage (e3) for supplying the working pressure ($P_{APP}$) from the pressure-regulating solenoid valve (10) to a working pressure supply port (22c, 32c) of the starting device (22, 32); and a circulation pressure introducing oil passage (c5) for introducing the circulation pressure ($P_{CIR}$) into the second feedback oil chamber (12a) from one (e.g., 22d, 32d) of the circulation pressure supply port (22d, 32d) and the circulation pressure discharge port (22e, 32e) that is located closer to the clutch (22, 32).

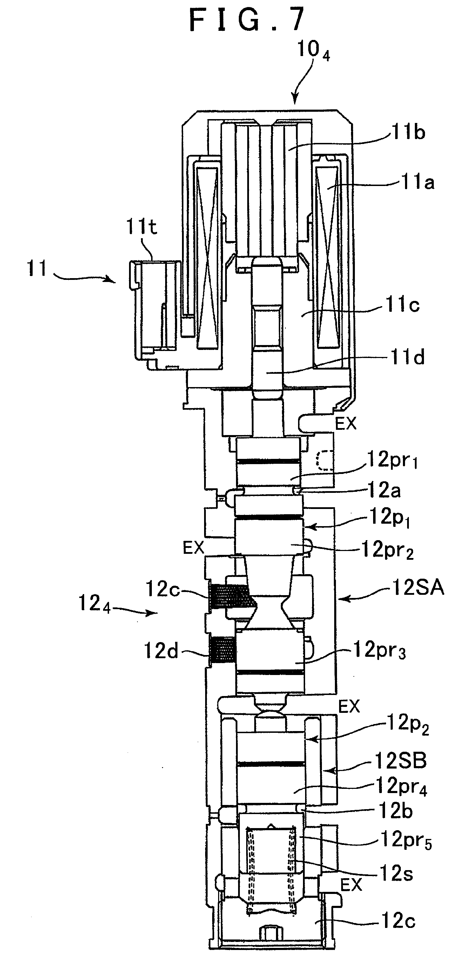

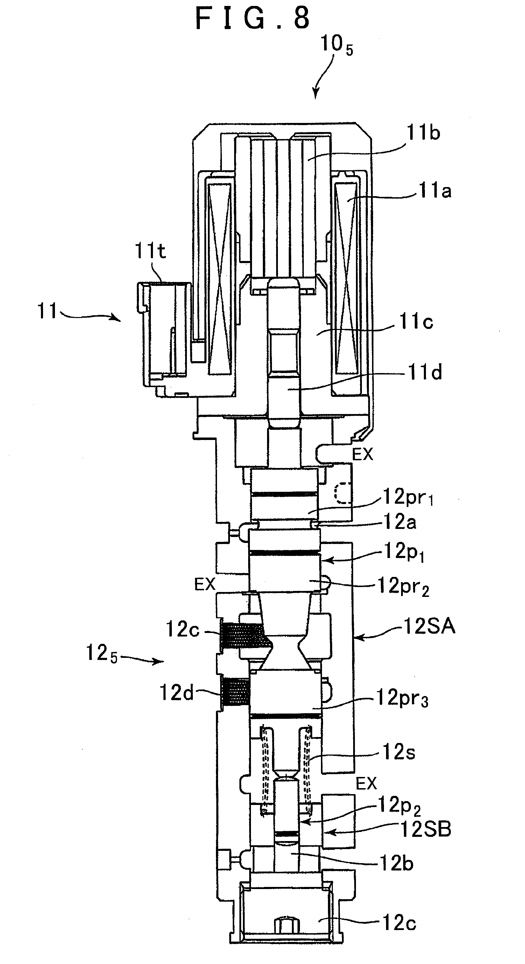

The present invention (see, e.g., FIGS. 7 and 8) is **characterized in that** the spool portion ($12_4$, $12_5$) of the pressure-regulating solenoid valve ($10_4$, $10_5$) has a main sleeve (12SA) that entirely contains the spool (12p) and slidably supports at least one end of the spool (12p), and a sub sleeve (12SB) that is interposed between the main sleeve (12SA) and the other end of the spool (12p) and slidably supports the other end of the spool (12p), and the spool is separated and formed into a first spool ($12p_1$) that is slidably supported by the main sleeve (12SA), and a second spool ($12p_2$) that is slidably supported by the sub sleeve (12SB).

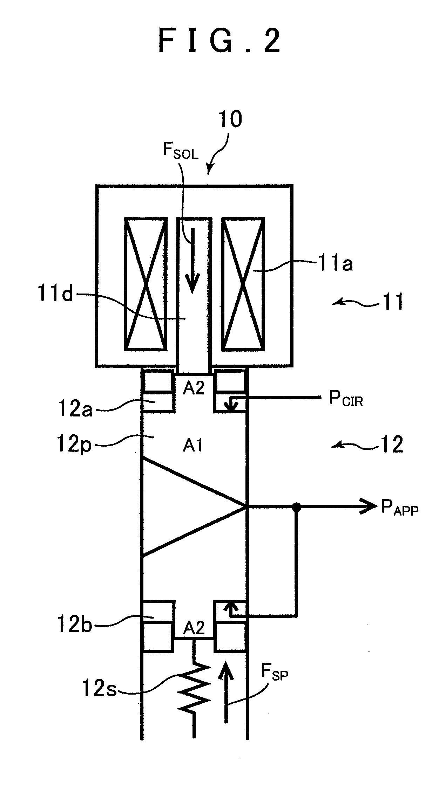

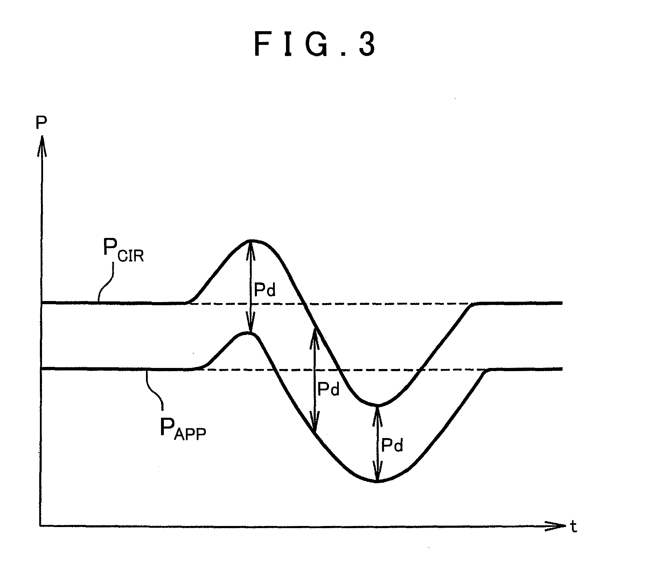

The present invention (see, e.g., FIGS. 2 and 3) is **characterized in that** the pressure-regulating solenoid valve (10) includes a spring (12s) for biasing the spool (12p) against a driving force of the solenoid portion (11), a relation of forces that are applied to the spool (12p) is represented by $P_{CIR} - P_{APP} = -(F_{SOL} - F_{SP})/(A1 - A2) = Pd$, where $P_{APP}$ represents the working pressure that is fed back to the first feedback oil chamber (12b), $P_{CIR}$ represents the circulation pressure that is fed back to the second feedback oil chamber (12a), $F_{SP}$ represents a biasing force of the spring (12s) that biases the spool in such a direction that reduces an amount of communication between an input port (12d) and an output port (12c) of the pressure-regulating solenoid valve (10), $F_{SOL}$ represents the driving force of the solenoid portion (11), and A1 - A2 represents the pressure-receiving area of the first feedback oil chamber (12b) and the second feedback oil chamber (12a), and in a state in which the driving force $F_{SOL}$ is constantly output, the difference Pd between the circulation pressure $P_{CIR}$ and the working pressure $P_{APP}$ is maintained constant even if the circulation pressure $P_{CIR}$

varies.

Note that the reference numerals in the parentheses are shown for reference to the drawings, and are given for convenience to facilitate understanding of the invention. Thus, these reference numerals do not affect the structure described in the claims.

[Effects of the Invention]

According to the present invention of claim 1, the pressure-receiving area of the first feedback oil chamber and the pressure-receiving area of the second feedback oil chamber are set equal to each other in the spool. Thus, the oil pressure acting force of the working pressure of the first feedback oil chamber and that of the circulation pressure of the second feedback oil chamber can be equal to each other, whereby engagement/disengagement control and slip control of the clutch can be accurately performed.

According to the present invention of claim 2, the starting device includes the hydraulic power transmission device for performing the power transmission between the driving source and the automatic speed change mechanism via a fluid, and the clutch is a lockup clutch. Thus, the circulation pressure varies significantly, especially in the state in which large differential rotation is generated in the hydraulic power transmission device. However, even if the circulation pressure varies significantly, the difference between the circulation pressure and the working pressure can always be maintained at an intended value, whereby engagement/disengagement control and slip control of the clutch can be accurately performed.

According to the present invention of claim 3, the circulation pressure is introduced into the second feedback oil chamber from one of the circulation pressure supply port and the circulation pressure discharge port that is located closer to the clutch. Thus, a variation in the circulation pressure can be more accurately transmitted to the second feedback oil chamber, and the difference between the circulation pressure and the working pressure can be more accurately maintained at an intended value, whereby engagement/disengagement control and slip control of the clutch can be accurately performed.

According to the present invention of claim 4, the spool is separated and formed into the first spool that is slidably supported by the main sleeve, and the second spool that is slidably supported by the sub sleeve. Thus, displacement of the centers due to a fitting error, a product error, or the like between the main sleeve and the sub sleeve can be absorbed by the separated portion therebetween, whereby especially the sealing capability between the sub sleeve and the second spool can be satisfactorily ensured. Thus, the length of the spool portion of the pressure-regulating solenoid valve in the axial direction can be reduced, which can contribute to implementation of a more compact hydraulic control device of the automatic transmission.

BRIEF DESCRIPTION OF THE DRAWINGS

[FIG. 1] FIG. 1 is a circuit diagram showing a hydraulic control device of an automatic transmission according to a first embodiment.

[FIG. 2] FIG. 2 is an illustration schematically showing a linear solenoid valve.

[FIG. 3] FIG. 3 is a timing chart showing the relation between a circulation pressure and a working pressure.

[FIG. 4] FIG. 4 is a schematic diagram showing a general structure of a vehicle drive system to which the present invention can be applied.

[FIG. 5] FIG. 5 is a circuit diagram showing a hydraulic control device of an automatic transmission according to a second embodiment.

[FIG. 6] FIG. 6 is a circuit diagram showing a hydraulic control device of an automatic transmission according to a third embodiment.

[FIG. 7] FIG. 7 is a cross-sectional view showing a linear solenoid valve according to a fourth embodiment.

[FIG. 8] FIG. 8 is a cross-sectional view showing a linear solenoid valve according to a fifth embodiment.

[FIG. 9] FIG. 9 is an illustration schematically showing a conventional linear solenoid valve.

[FIG. 10] FIG. 10 is a timing chart showing the relation between a circulation pressure and a working pressure in a conventional example.

BEST MODES FOR CARRYING OUT THE INVENTION

(First Embodiment)

A first embodiment of the present invention will be described below with reference to FIGS. 1 to 4.

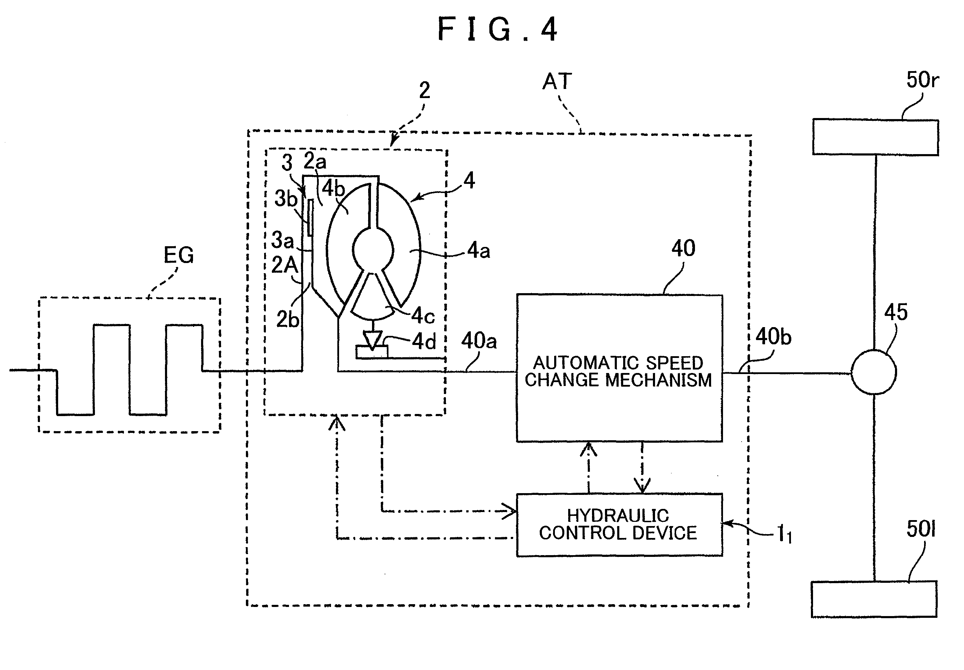

First, the general structure of an automatic transmission and a vehicle drive system to which a hydraulic control device $1_1$ of an automatic transmission of the first embodiment can be applied will be described with reference to FIG. 4. As shown in FIG. 4, an automatic transmission AT is connected to an engine (a driving source) EG, and mainly includes a starting device 2, an automatic speed change mechanism 40, and a hydraulic control device 1. The starting device 2 has a torque converter 4 and a lockup clutch 3. The torque converter (a hydraulic power transmission device) 4 includes: a pump impeller 4a coupled to a front cover 2A to which rotation from the engine EG is input; a turbine runner 4b which is positioned to face the pump impeller 4a so that power is hydraulically transmitted to the turbine runner 4b via oil, and which is connected to an input shaft 40a of the automatic speed change mechanism 40; and a stator 4c which is positioned between the pump impeller 4a and the turbine runner 4b, and whose rotation is restricted to one direction by a one-way clutch 4d.

The lockup clutch (a clutch) 3 includes a piston 3a positioned so as to be movable in the axial direction, and a friction material 3b provided on the outer periphery of the piston 3a. The piston 3a is placed so as to separate an oil-tight space 2a from an oil-tight space 2b, and is drivingly moved to and away from the front cover 2A by the differential pressure between the space 2a and the space 2b. That is, as the oil pressure in the space 2b increases, the friction material 3b is separated from the inner side surface of the front cover 2A, and is disengagement-controlled. As the oil pressure in the space 2a increases, the friction material 3b is pressed against the inner side surface of the front cover 2A, and is slip-controlled and engagement-controlled, whereby the lockup clutch 3 is engaged. Thus, when the lockup clutch 3 is engaged, the front cover 2A is directly engaged with the input shaft of the automatic speed change mechanism 40. That is, the torque converter 4 is locked up.

The automatic speed change mechanism 40 is hydraulically controlled by the hydraulic control device $1_1$ to perform engagement/disengagement control of, e.g., friction engagement elements (clutches and brakes), not shown, thereby changing the speed ratio, namely shifting rotation of the input shaft 40a to output the shifted speed from an output shaft 40b. The output shaft 40b is connected to a differential unit 45 via a propeller shaft or the like, and is structured to transmit driving rotation to right and left driving wheels 50r, 501, respectively.

The hydraulic circuit structure in the hydraulic control device $1_1$ of the automatic transmission will be described in detail below. As shown in FIG. 1, the hydraulic control device $1_1$ of the automatic transmission includes an oil pump 5, a primary regulator valve (a circulation pressure supply portion) 6, a modulator valve (a circulation pressure supply portion) 7, a lockup relay valve 8, a linear solenoid valve (SLU) (a pressure-regulating solenoid valve) $10_1$, an oil cooler (COOLER) 15, and the like.

Note that the hydraulic control device $1_1$ of the automatic transmission includes various valves, oil passages, and the like for supplying oil pressure to hydraulic servos of the clutches and brakes of the speed change mechanism 40, in addition to the parts shown in FIG. 1. However, description of the parts other than a main part of the present invention will be omitted for convenience of explanation.

Reference character $P_{SLT}$ in FIG. 1 represents an SLT pressure $P_{SLT}$ that is regulated and output from a linear solenoid valve SLT, not shown, based on a throttle opening or the like. Reference character $P_D$ in FIG. 1 represents a forward range pressure $P_D$ that is output from a manual shift valve, not shown, when in a forward range.

As shown in FIG. 1, the hydraulic control device $1_1$ of the automatic transmission includes the oil pump 5 that is driven according to rotation of the engine EG, and an oil pressure is generated by sucking oil from an oil pan, not shown, by the oil pump 5 through a strainer. The oil pressure generated by the oil pump 5 is output to oil passages a1, a2, a3, a4, and a5, and is regulated to a line pressure $P_L$ by the primary regulator valve 6. The line pressure $P_L$ and the primary regulator valve 6 will be described in detail later.

The primary regulator valve 6 includes a spool 6p, and a spring 6s for biasing the spool 6p upward in the drawing, and also includes an oil chamber 6a located above the spool 6p, an oil chamber 6b located below the spool 6p, a pressure-regulating port 6c, a discharge port 6d, and a back pressure output port 6e. The SLT pressure $P_{SLT}$ is input from the linear solenoid valve SLT to the oil chamber 6b via an oil passages i1, and the line pressure $P_L$, which will be described in detail later, is input to the oil chamber 6a via the oil passages a3, a4 as a feedback pressure.

The spool 6p of the primary regulator valve 6 is subjected to the biasing force of the spring 6s and the SLT pressure $P_{SLT}$ against the feedback pressure. That is, the position of the spool 6p is controlled mainly by the magnitude of the SLT pressure $P_{SLT}$. When the spool 6p is located on the lower side in the drawing, the pressure-regulating port 6c communicates with the discharge port 6d. As the spool 6p is controlled to move to the upper side in the drawing based on the SLT pressure $P_{SLT}$, the amount of communication (the throttle amount) between the pressure-regulating port 6c and the discharge port 6d is accordingly reduced (disconnected), while the amount of communication (the throttle amount) between the pressure-regulating port 6c and the back pressure output port 6e is increased accordingly. That is, the spool 6p is controlled to move upward according to the magnitude of the SLT pressure $P_{SLT}$ that is input to the oil chamber 6b, and the amount of oil pressure that is discharged from the discharge port 6d is adjusted, whereby an oil pressure of the pressure-regulating port 6c is regulated. Thus, oil pressures of the oil passages a1, a2, a3, a4, and a5 are regulated as the line pressure $P_L$ according to the throttle opening.

The line pressure $P_L$ is supplied to the modulator valve 7 via the oil passage a5. The modulator valve 7 has a spool 7p, a spring 7s for biasing the spool 7p upward in the drawing, an input port 7a to which the line pressure $P_L$ is input via the oil passage a5, an output port 7b, and a feedback oil chamber 7c. If the line pressure $P_L$ is equal to or less than a predetermined value, the modulator valve 7 outputs the oil pressure as it is from the output port 7b as the circulation pressure $P_{CIR}$. If the line pressure $P_L$ is equal to or higher than the predetermined value, a feedback pressure, which is input from the output port 7b to the feedback oil chamber 7c via oil passages c1, c2, overcomes the spring 7s, and the amount of communication (the throttle amount) between the input port 7a and the output port 7b is reduced, and an oil pressure regulated to a fixed value is output as the circulation pressure $P_{CIR}$.

Note that the line pressure $P_L$ is supplied not only to the modulator valve 7, but also to a manual shift valve, various solenoid valves, and the like, not shown. In, e.g., stepped automatic transmissions, the line pressure $P_L$ is eventually supplied to hydraulic servos of clutches and brakes to establish a shift speed. In, e.g., belt-type continuously variable transmissions, the line pressure $P_L$ is supplied to hydraulic servos of forward/rearward switch clutches and brakes, and the like. Namely, the line pressure $P_L$ is used in each part as a source pressure in hydraulic control of the automatic transmission.

The lockup relay valve 8 includes a spool 8p, and a spring 8s for biasing the spool 8p upward in the drawing, and includes an oil chamber 8a located above the spool 8p, a port 8b, an input port 8c, a port 8d, an input port 8e, an input port 8f, an output port 8g, and an input port 8h.

An output port 12c of a spool portion $12_1$ of the linear solenoid valve $10_1$ is connected to the oil chamber 8a via oil passages e1, e3, e4. When a working pressure $P_{APP}$ is output from the linear solenoid valve $10_1$, the working pressure $P_{APP}$ is input to the oil chamber 8a. That is, in the state in which no working pressure $P_{APP}$ is output from the linear solenoid valve $10_1$, the spool 8p of the lockup relay valve 8 is located at a position shown in the left half of the valve in the drawing (hereinafter referred to as the "left-half position"). In the state in which the working pressure $P_{APP}$ having a predetermined value or more is output from the linear solenoid valve $10_1$, the spool 8p of the lockup relay valve 8 overcomes the biasing force of the spring 8s, and is located at a position shown in the right half of the valve in the drawing (hereinafter referred to as the "right-half position"). That is, the lockup relay valve 8 is switched based on the input state of the working pressure $P_{APP}$.

If the spool 8p of the lockup relay valve 8 is located at the left-half position, the input port 8c communicates with the port 8d, and the input port 8e communicates with the output port 8g. If the spool 8p is located at the right-half position, the input port 8c communicates with the port 8b, the input port 8e communicates with the port 8d, and the input port 8h communicates with the output port 8g.

That is, if the spool 8p of the lockup relay valve 8 is located at the left-half position, the circulation pressure $P_{CIR}$, which is output from the modulator valve 7, is output from the port 8d to an oil passage f1 via an oil passage c3 and the input port 8c, and is supplied from a lockup off port (L-UP OFF port) 2c of the starting device 2 into the starting device 2. The circulation pressure $P_{CIR}$ supplied into the starting device 2 is discharged from a lockup on port (L-UP ON port) 2d to an oil passage d2, is output from the output port 8g to an oil passage g1 via oil passages d3, d4 and the input port 8f, and is supplied to the oil cooler 15. Oil supplied to the oil cooler 15 is cooled by the oil cooler 15, and is then returned to the oil pan, not shown, so as to be sucked again by the oil pump 5.

Note that at this time, the circulation pressure $P_{CIR}$ discharged to the oil passage d2 is supplied also to a second feedback oil chamber 12a of the linear solenoid valve $10_1$, which will be described later, via the oil passage d3 and an oil passage d5. However, since the linear solenoid valve $10_1$ is not in a driven state, the circulation pressure $P_{CIR}$ does not affect the working pressure $P_{APP}$ that will be described later.

The linear solenoid valve $10_1$ is roughly formed by a solenoid portion 11 and the spool portion $12_1$. The solenoid portion 11 includes a coil 11a for generating a magnetic field based on a current from a terminal 11t to which wirings are connected, a core member 11c for converging the magnetic field of the coil, a plunger 11b that is drawn downward in the drawing by the magnetic field from the core member 11c, and a shaft 11d that is drivingly pressed downward in the drawing by the plunger 11b.

The spool portion $12_1$ includes a spool 12p that is drivingly pressed downward in the drawing by the shaft 11d, and a spring 12s for biasing the spool 12p upward in the drawing, and has the second feedback oil chamber 12a, the output port 12c, an input port 12d, and a first feedback oil chamber 12b sequentially from above in the drawing. The spool 12p is formed so that a part of the spool 12p located above the second feedback oil chamber 12a, and a part of the spool 12p located below the first feedback oil chamber 12b have a small land diameter, and a part of the spool 12p located between the second feedback oil chamber 12a and the first feedback oil chamber 12b has a land diameter larger than the small land diameter.

That is, as shown in FIG. 2, the second feedback oil chamber 12a and the first feedback oil chamber 12b are structured to have a pressure-receiving area "A1 - A2" obtained by the difference between a cross-sectional area A1 of the large land diameter and a cross-sectional area A2 of the small land diameter.

As shown in FIG. 1, when a current is supplied from the terminal 11t of the linear solenoid valve $10_1$ to the coil 11a based on electronic control of a control portion, not shown, the shaft 11d electrically and drivingly presses the spool 12p downward in the drawing against the biasing force of the spring 12s. Thus, the amount of communication between the input port 12d and the output port 12c is gradually increased, and the forward range pressure $P_D$ that is input to the input port 12d is gradually output as the working pressure $P_{APP}$ from the output port 12c to the oil passage e1. That is, the working pressure $P_{APP}$ is controlled to increase based on the magnitude of the current.

When the working pressure $P_{APP}$ is output from the linear solenoid valve $10_1$ to the oil passage e1, and the working pressure $P_{APP}$ is increased to a predetermined value or more, the spool 8p of the lockup relay valve 8 is switched to the right-half position by the working pressure $P_{APP}$ that is input to the oil chamber 8a via the oil passages e3, e4. When the spool 8p of the lockup relay valve 8 is located at the right-half position, the circulation pressure $P_{CIR}$ that is output from the modulator valve 7 is output from the port 8b to an oil passage d1 and the oil passage d2 via the oil passage c3 and the input port 8c, and is supplied from the lockup on port 2d of the starting device 2 into the starting device 2. The working pressure $P_{APP}$ that is input to the input port 8e via the oil passages e1, e3 and an oil passage e5 is output from the port 8d to the oil passage f1, and is supplied from the lockup off port 2c into the starting device 2.

Thus, due to the difference between the circulation pressure $P_{CIR}$ in the space 2a and the working pressure $P_{APP}$ in the space 2b in the starting device 2, that is, if the circulation pressure $P_{CIR}$ is larger than the working pressure $P_{APP}$, the piston 3a is drivingly pressed against the front cover 2A, and the friction material 3b is pressed against the inner side surface of the front cover 2A and is slip-controlled and engagement-controlled, whereby the lockup clutch 3 is engaged.

Note that when the lockup clutch 3 is in the engaged state, the circulation pressure $P_{CIR}$ is not discharged from the starting device 2, but the back pressure of the line pressure $P_L$ which is output from the back pressure output port 6e of the primary regulator valve 6 is input to the input port 8h of the lockup relay valve 8 via an oil passage b1, is output from the output port 8g to the oil passage g1, and is supplied to the oil cooler 15. Similarly, oil supplied to the oil cooler 15 is cooled by the oil cooler 15, and is then returned to the oil pan, not shown, so as to be sucked again by the oil pump 5.

In the hydraulic control device $1_1$ of the automatic transmission, when the lockup clutch 3 is in the engaged state, the circulation pressure $P_{CIR}$ that is output to the oil passage d1 is input to the second feedback oil chamber 12a of the linear solenoid valve $10_1$ via the oil passages d3, d5, and the working pressure $P_{APP}$ that is output from the output port 12c of the linear solenoid valve $10_1$ is input to the first feedback oil chamber 12b via the oil passages e1, e2 so as to provide feedback action in the direction opposite to the first feedback oil chamber 12b.

Thus, as shown in FIG. 2, the relation of forces in the linear solenoid valve $10_1$ is represented by the following expression.

$$(A1 - A2) \cdot P_{APP} + F_{SP} = (A1 - A2) \cdot P_{CIR} + F_{SOL} \qquad \dots (2)$$

This expression can be rewritten as follows.

$$P_{APP} = P_{CIR} + (F_{SOL} - F_{SP})/(A1 - A2) \qquad \dots (3)$$

Thus, the following expression can be obtained.

$$P_{CIR} - P_{APP} = -(F_{SOL} - F_{SP})/(A1 - A2) = Pd \qquad \dots (4)$$

where "$F_{SP}$" represents a biasing force of the spring 12s, and "$F_{SOL}$" represents a driving force of the shaft 11d, and "A1 - A2" represents a pressure-receiving area.

Accordingly, in the state in which the driving force $F_{SOL}$ of the shaft 11d having a constant value is output, the pressure-receiving area "A1 - A2" and the biasing force $F_{SP}$ of the spring are also constant, and thus, the relation between the working pressure $P_{APP}$ and the circulation pressure $P_{CIR}$ is such that there is a constant difference Pd between the working pressure $P_{APP}$ and the circulation pressure $P_{CIR}$. That is, by setting the pressure-receiving area "A1 - A2" of the first feedback oil chamber 12b and the pressure-receiving area "A1 - A2" of the second feedback oil chamber 12a equal to each other, an oil pressure acting force of the working pressure $P_{APP}$ of the first feedback oil chamber 12b and that of the circulation pressure $P_{CIR}$ of the second feedback oil chamber 12a are set equal to each other with respect to the spool 12p.

Thus, as shown in FIG. 3, for example, even if differential rotation is generated in the torque converter 4, and the circulation pressure $P_{CIR}$ varies significantly, the working pressure $P_{APP}$ varies so as to maintain the constant difference Pd by feedback control. That is, the difference Pd between the circulation pressure $P_{CIR}$ in the space 2a and the working pressure $P_{APP}$ in the space 2b in the starting device 2 does not vary and can always be maintained at an intended value (a constant value). Thus, slip control and engagement control can be accurately performed.

As described above, the hydraulic control device $1_1$ of the automatic transmission is structured so that the oil pressure acting force of the working pressure $P_{APP}$ of the first feedback oil chamber 12b and that of the circulation pressure $P_{CIR}$ of the second feedback oil chamber 12a are set equal to each other with respect to the spool 12p of the spool portion $12_1$ of the solenoid valve $10_1$. Thus, even if the circulation pressure $P_{CIR}$ varies, the difference Pd between the circulation pressure $P_{CIR}$ and the working pressure $P_{APP}$ can always be maintained at the intended value, whereby engagement/disengagement control and slip control of the clutch can be accurately performed.

Specifically, since the pressure-receiving area "A1 - A2" of the first feedback oil chamber 12b and the pressure-receiving area "A1 - A2" of the second feedback oil chamber 12a are set equal to each other in the spool 12p, the oil pressure acting force of the working pressure $P_{APP}$ of the first feedback oil chamber 12b and that of the circulation pressure $P_{CIR}$ of the second feedback oil chamber 12a can be equal to each other.

Moreover, the starting device 2 includes the torque converter 4 that transmits power between the engine EG and the automatic speed change mechanism 40 via a fluid, and the clutch is the lockup clutch 3 that can lock up the torque converter 4. Thus, the circulation pressure $P_{CIR}$ varies significantly, especially in the state in which large differential rotation is generated in the torque converter 4. However, even if the circulation pressure $P_{CIR}$ varies significantly, the difference Pd between the circulation pressure $P_{CIR}$ and the working pressure $P_{APP}$ can always be maintained at the intended value, whereby engagement/disengagement control and slip control of the lockup clutch 3 can be accurately performed.

(Second Embodiment)

A second embodiment, which is partially modified from the first embodiment, will be described below with reference to FIG. 5. Note that in the description of the second embodiment, the parts similar to those of the first embodiment are denoted with the same reference characters, and description thereof will be omitted.

A hydraulic control device $1_2$ of an automatic transmission according to the second embodiment is modified from the hydraulic control device $1_1$ of the automatic transmission according to the first embodiment in the structure of a starting device 22 and a portion for supplying a circulation pressure $P_{CIR}$.

That is, as shown in FIG. 5, the starting device 22 includes a lockup on port (a working pressure supply port) 22c for inputting a working pressure $P_{APP}$ via an oil passage e3 (a working pressure supply oil passage), an input port (IN) (a circulation pressure supply port) 22d for inputting the circulation pressure $P_{CIR}$ via an oil passage c4 (a circulation pressure supply oil passage), and a discharge port (OUT) (a circulation pressure discharge port) 22e for discharging the circulation pressure $P_{CIR}$. The starting device 22 is formed by a so-called three-way starting device 22. Thus, the starting device 22 is always supplied with the circulation pressure $P_{CIR}$ from the input port 22d, and the circulation pressure $P_{CIR}$, which has circulated in the starting device 22, is output from the discharge port 22e to an oil passage d1 (a circulation pressure discharge oil passage) with an orifice 24 inserted therein, whereby the pressure in a space 22a of the starting device 22 is maintained at a substantially constant value.

A lockup clutch (a clutch) 23 includes a support member 23a that is placed so as to be movable in the axial direction, and a plurality of friction plates 23b that are supported by the support member 23a. The friction plates 23b are engagement/disengagement controlled and slip-controlled by the difference in pressure between the space 22a and a space 22b. That is, if the working pressure $P_{APP}$ on the space 22b side is lower than the circulation pressure $P_{CIR}$ on the space 22a side, the friction plates 23b are disengagement-controlled. If the working pressure $P_{APP}$ on the space 22b side is higher than the circulation pressure $P_{CIR}$ in the space 22a, the friction plates 23b are slip-controlled and engagement-controlled, whereby the lockup clutch 23 is engaged. When the lockup clutch 23 is engaged, a front cover 2A is directly engaged with an input shaft of an automatic speed change mechanism 40. That is, the torque converter 4 is locked up.

In the second embodiment, the back pressure of a line pressure $P_L$ which is output from a back pressure output port 6e of a primary regulator valve (a circulation pressure supply portion) 6 is input to a modulator valve 17 via oil passages b1, b2. The modulator valve (the circulation pressure supply portion) 17 has a spool 17p, a spring 17s for biasing the spool 17p upward in the drawing, an input port 17a through which the back pressure of the line pressure $P_L$ is input via the oil passage b2, an output port 17b, and a feedback oil chamber 17c. If the back pressure of the line pressure $P_L$ is equal to or less than a predetermined value, the modulator valve 17 outputs the oil pressure as it is from the output port 17b as the circulation pressure $P_{CIR}$. If the back pressure of the line pressure $P_L$ is equal to or higher than the predetermined value, a feedback pressure, which is input from the output port 17b to the feedback oil chamber 17c via oil passages c1, c2, overcomes the spring 17s, whereby the communication amount (the throttle amount) between the input port 17a and the output port 17b is reduced, and an oil pressure regulated to a fixed value is output as the circulation pressure $P_{CIR}$.

Then, the circulation pressure $P_{CIR}$ using the back pressure of the line pressure $P_L$ is input to the input port 22d of the starting device 22 via an oil passage c3 and the oil passage c4, and is also input to a second feedback oil chamber 12a of a linear solenoid valve $10_2$ via an oil passage c5 (a circulation pressure introducing oil passage).

Note that the back pressure of the line pressure $P_L$ which is output from the back pressure output port 6e of the primary regulator valve 6 is supplied to an oil cooler 15 via the oil passage b1 and an oil passage b3. Oil supplied to the oil cooler 15 is cooled by the oil cooler 15, and is then returned to an oil pan, not shown, so as to be sucked again by an oil pump 5.

The hydraulic control device $1_2$ of the automatic transmission of the second embodiment having the above structure is structured so that the oil pressure acting force of the working pressure $P_{APP}$ of the first feedback oil chamber 12b and that of the circulation pressure $P_{CIR}$ of the second feedback oil chamber 12a are equal to each other with respect to the spool 12p of the spool portion $12_2$ of the solenoid valve $10_2$. Thus, even if the circulation pressure $P_{CIR}$ varies, the difference Pd between the circulation pressure $P_{CIR}$ and the working pressure $P_{APP}$ can always be maintained at an intended value, whereby engagement/disengagement control and slip control of the clutch can be accurately performed.

In particular, in the hydraulic control device $1_2$ of the automatic transmission according to the second embodiment, the circulation pressure $P_{CIR}$ is introduced into the second feedback oil chamber 12a from the oil passage c4, which is connected to the input port 22d located closer to the lockup clutch 23 out of the input port 22d and the discharge port 22e of the starting device 22, via the oil passage c5. Thus, for example, an oil pressure at a position closer to the lockup clutch 23 can be fed back, as compared to, e.g., the case where the circulation pressure $P_{CIR}$, which is discharged from the oil passage d1 connected to the discharge port 22e, is introduced into the second feedback oil chamber 12a. Accordingly, a variation in circulation pressure $P_{CIR}$ can be more accurately transmitted to the second feedback oil chamber 12a, and the difference Pd between the circulation pressure $P_{CIR}$ and the working pressure $P_{APP}$ can be more accurately maintained at the intended value, whereby engagement/disengagement control and slip control of the lockup clutch 23 can be accurately performed.

Note that since the structures, functions, and effects of the parts other than those described above are similar to the first embodiment, description thereof will be omitted.

(Third Embodiment)

A third embodiment, which is partially modified from the first and second embodiments, will be described below with reference to FIG. 6. Note that in the description of the third embodiment, the parts similar to those of the first and second embodiments are denoted with the same reference characters, and description thereof will be omitted.

A hydraulic control device $1_3$ of an automatic transmission according to the third embodiment is modified from the hydraulic control devices $1_1$, $1_2$ of the automatic transmission according to the first and second embodiments in the structure of a starting device 32 and a portion for supplying a circulation pressure $P_{CIR}$.

That is, as shown in FIG. 6, as in the second embodiment, the starting device 32 includes a lockup on port (a working pressure supply port) 32c for inputting a working pressure $P_{APP}$ via an oil passage e3 (a working pressure supply oil passage), an input port (IN) (a circulation pressure supply port) 32d for inputting the circulation pressure $P_{CIR}$ via an oil passage c4 (a circulation pressure supply oil passage), and a discharge port (OUT) (a circulation pressure discharge port) 32e for discharging the circulation pressure $P_{CIR}$, and is formed by a so-called three-way starting device 32. Thus, the starting device 32 is always supplied with the circulation pressure $P_{CIR}$ from the input port 32d, and the circulation pressure $P_{CIR}$, which has circulated in the starting device 32, is output from the discharge port 32e to an oil passage d1 (a circulation pressure discharge oil passage) with an orifice 24 inserted therein, whereby the pressure on a space 32a side of the starting device 32 is maintained at a substantially constant value.

The starting device 32 of the third embodiment does not include a torque converter, and includes only a starting clutch 33. Thus, when, e.g., starting a vehicle, the starting clutch 33 is slip-controlled and engagement-controlled, whereby transmission of a driving force is achieved while absorbing the differential rotation between an engine EG and an input shaft of an automatic speed change mechanism 40.

The starting clutch (a clutch) 33 includes a support member 33a that is placed so as to be movable in the axial direction, and a plurality of friction plates 33b that are supported by the support member 33a. The friction plates 33b are engagement/disengagement controlled and slip-controlled by the difference in pressure between the space 32a and a space 32b. That is, if the working pressure $P_{APP}$ on the space 32b side is lower than the circulation pressure $P_{CIR}$ on the space 32a side, the friction plates 33b are disengagement-controlled. If the working pressure $P_{APP}$ on the space 32b side is higher than the circulation pressure $P_{CIR}$ on the space 32a side, the friction plates 33b are slip-controlled and engagement-controlled, whereby the starting clutch 33 is engaged.

In the third embodiment, the back pressure of a line pressure $P_L$ which is output from a back pressure output port 6e of a primary regulator valve (a circulation pressure supply portion) 6 is input to a secondary regulator valve 9 via oil passages b1, b2. The secondary regulator valve (the circulation pressure supply portion) 9 includes a spool 9p, and a spring 9s for biasing the spool 9p upward in the drawing, and also includes an oil chamber 9a located above the spool 9p, an oil chamber 9b located below the spool 9p, a pressure-regulating port 9c, a discharge port 9d, and a back pressure output port 9e. An SLT pressure $P_{SLT}$ is input from the linear solenoid valve SLT, which is described above, to the oil chamber 9b via oil passages i1,i3, and a secondary pressure $P_{SEC}$, which will be described in detail later, is input to the oil chamber 9a via the oil passages b2, b3, b4 as a feedback pressure. Note that the SLT pressure $P_{SLT}$ is input from the linear solenoid valve SLT to an oil chamber 6b of the primary regulator valve 6 via the oil passage i1 and an oil passage i2.

The spool 9p of the secondary regulator valve 9 is subjected to the biasing force of the spring 9s and the SLT pressure $P_{SLT}$ against the feedback pressure. That is, the position of the spool 9p is controlled mainly by the magnitude of the SLT pressure $P_{SLT}$. When the spool 9p is located on the lower side in the drawing, the pressure-regulating port 9c communicates with the discharge port 9d. As the spool 9p is controlled to move to the upper side in the drawing based on the SLT pressure $P_{SLT}$, the amount of communication (the throttle amount) between the pressure-regulating port 9c and the discharge port 9d is accordingly reduced (disconnected), and the amount of communication (the throttle amount) between the pressure-regulating port 9c and the back pressure output port 9e is increased accordingly. That is, the spool 9p is controlled to move upward according to the magnitude of the SLT pressure $P_{SLT}$ that is input to the oil chamber 9b, and the amount of oil pressure that is discharged from the discharge port 9c is adjusted, whereby an oil pressure of the pressure-regulating port 9d is regulated. Thus, oil pressures of the oil passages b1, b2, b3, b4, b5 are regulated as the secondary pressure $P_{SEC}$ according to the throttle opening.

The secondary pressure $P_{SEC}$ regulated by the secondary regulator valve 9 is input to a modulator valve 27. The modulator valve (a circulation pressure supply portion) 27 has a spool 27p, a spring 27s for biasing the spool 27p upward in the drawing, an input port 27a to which the secondary pressure $P_{SEC}$ is input via the oil passage b5, an output port 27b, and a feedback oil chamber 27c. If the secondary pressure $P_{SEC}$ is equal to or less than a predetermined value, the modulator valve 27 outputs the oil pressure as it is from the output port 27b as the circulation pressure $P_{CIR}$. If the secondary pressure $P_{SEC}$ is equal to or higher than the predetermined value, a feedback pressure, which is input from the output port 27b to the feedback oil chamber 27c via oil passages c1, c2, overcomes the spring 27s, and the amount of communication (the throttle amount) between the input port 27a and the output port 27b is reduced, and an oil pressure regulated to a fixed value is output as the circulation pressure $P_{CIR}$.

The circulation pressure $P_{CIR}$ using the secondary pressure $P_{SEC}$ is input to the input port 32d of the starting device 32 via an oil passage c3 and the oil passage c4, and is also input to a second feedback oil chamber 12a of a linear solenoid valve $10_3$ via an oil passage c5 (a circulation pressure introducing oil passage).

Note that the back pressure of the secondary pressure $P_{SEC}$ that is output from the back pressure output port 9e of the secondary regulator valve 9 is supplied to an oil cooler 15 via an oil passage g1. Oil supplied to the oil cooler 15 is cooled by the oil cooler 15, and is then returned to an oil pan, not shown, so as to be sucked again by an oil pump 5.

The hydraulic control device $1_3$ of the automatic transmission of the third embodiment having the above structure is structured so that the oil pressure acting force of the working pressure $P_{APP}$ of a first feedback oil chamber 12b and that of the circulation pressure $P_{CIR}$ of the second feedback oil chamber 12a are equal to each other with respect to the spool 12p of the spool portion $12_3$ of the solenoid valve $10_3$. Thus, even if the circulation pressure $P_{CIR}$ varies, the difference Pd between the circulation pressure $P_{CIR}$ and the working pressure $P_{APP}$ can always be maintained at an intended value, whereby engagement/disengagement control and slip control of the clutch can be accurately performed.

In particular, in the hydraulic control device $1_3$ of the automatic transmission according to the third embodiment, the circulation pressure $P_{CIR}$ is introduced into the second feedback oil chamber 12a from the oil passage c4, which is connected to the input port 32d located closer to the starting clutch 33 out of the input port 32d and the discharge port 32e of the starting device 32, via the oil passage c5. Thus, for example, an oil pressure at a position closer to the starting clutch 33 can be fed back, as compared to, e.g., the case where the circulation pressure $P_{CIR}$, which is discharged from the oil passage d1 connected to the discharge port 32e, is introduced into the second feedback oil chamber 12a. Accordingly, a variation in circulation pressure $P_{CIR}$ can be more accurately transmitted to the second feedback oil chamber 12a, and the difference Pd between the circulation pressure $P_{CIR}$ and the working pressure $P_{APP}$ can be more accurately maintained at the intended value, whereby engagement/disengagement control and slip control of the starting clutch 33 can be accurately performed.

Note that since the structures, functions, and effects of the parts other than those described above are similar to the first and second embodiments, description thereof will be omitted.

(Fourth Embodiment)

A fourth embodiment, which is partially modified from the first to third embodiments, will be described with reference to FIG. 7. Note that in the description of the fourth embodiment, the parts similar to those of the first to third embodiments are denoted with the same reference characters, and description thereof will be omitted.

The fourth embodiment is partially modified from the hydraulic control device 1 of the automatic transmission according to the first to third embodiments in the structure of the spool portion 12 of the linear solenoid valve 10.

As described above, in the linear solenoid valve 10 of the hydraulic control device 1 of the automatic transmission, the pressure-receiving area of the second feedback oil chamber 12a and the pressure-receiving area of the first feedback oil chamber 12b are set equal to each other. Accordingly, the spool 12p needs to be formed so as to have a thin (small) land diameter in one end (a portion the slides with respect to a main sleeve 12SA), have a thick (large) land diameter in an intermediate portion, and have a thin (small) land diameter in the other end. Thus, in the structures of the first to third embodiments (see FIGS. 1,5, and 6), when manufacturing the spool portion 12 of the solenoid valve 10, the spool 12p is inserted into the main sleeve 12SA from the one end (the lower side in the drawing) of the spool 12p, and a sub sleeve 12SB is fittingly inserted between the other end (the upper side in the drawing) of the spool 12p and the main sleeve 12SA, and then the solenoid portion 11 is attached, whereby the spool portion 12 is completed.

However, in the structures of the first to third embodiments (see FIGS. 1, 5, and 6), an error may be caused between the center of the main sleeve 12SA and the center of the sub sleeve 12SB due to a fitting error between the main sleeve 12SA and the sub sleeve 12SB, a product error of the sub sleeve 12SB, or the like, and the center of the spool 12p does not necessarily match the center of the sub sleeve 12SB. That is, the three centers, namely the center of the main sleeve 12SA, the center of the sub sleeve 12SB, and the center of the spool 12p, can be slightly displaced from each other due to an error or the like. In particular, displacement between the center of the spool 12p and the center of the sub sleeve 12SB affects the sealing capability between the spool 12p and the sub sleeve 12SB. Thus, in order to ensure the sealing capability, the amount by which the spool 12p and the sub sleeve 12SB overlap each other in the axial direction needs to be increased, which increases the length of the spool portion 12.

Thus, in a spool portion $12_4$ of a linear solenoid valve $10_4$ of the fourth embodiment, as shown in FIG. 7, the spool 12p is separated into two parts, and is formed by a first spool $12p_1$ and a second spool $12p_2$.

More specifically, as shown in FIG. 7, the spool portion $12_4$ of the linear solenoid valve $10_4$ in the fourth embodiment includes: the first spool $12p_1$ having a small-diameter land portion $12pr_1$, a large-diameter land portion $12pr_2$, and a large-diameter land portion $12pr_3$; the second spool $12p_2$ having a large-diameter land portion $12pr_4$ and a small-diameter land portion $12pr_5$; a cylindrical sub sleeve 12SB; and a main sleeve 12SA entirely containing these elements.

The first spool $12p_1$ is structured so that the second feedback oil chamber 12a is formed by the difference in pressure-receiving area "A1 - A2" which is produced by the difference in diameter between the small-diameter land portion $12pr_1$ and the large-diameter land portion $12pr_2$, and the communication state between an output port 12c and an input port 12d, and the communication state between the output port 12c and a drain port EX are adjusted by the position of the gap between the large-diameter land portion $12pr_2$ and the large-diameter land portion $12pr_3$ in the axial direction, namely by the position of the first spool $12p_1$ in the axial direction. Each land portion $12pr_1$, $12pr_2$, $12pr_3$ (that is, at least one end) of the first spool $12p_1$ is slidably supported on the inner periphery of the main sleeve 12SA.

On the other hand, the second spool $12p_2$ has its upper end in the drawing in contact with the lower end of the first spool $12p_1$ in the drawing, and is completely separated from the first spool $12p_1$. The first feedback oil chamber 12b is formed by the difference in pressure-receiving area "A1 - A2" which is produced by the difference in diameter between the large-diameter land portion $12pr_4$ and the small-diameter land portion $12pr_5$. The sub sleeve 12SB is interposed between the main sleeve 12SA and the land portions $12pr_4$, $12pr_5$ of the second spool $12p_2$ so as to fill the gap therebetween, and each land portion $12pr_4$, $12pr_5$ (that is, the other end) of the second spool $12p_2$ is slidably supported on the inner periphery of the sub sleeve 12SB.

Note that a drain port EX is formed in the portion (that is, the separated portion) where the lower end of the first spool $12p_1$ in the drawing contacts the upper end of the second spool $12p_2$ in the drawing, so that the drive states of the first spool $12p_1$ and the second spool $12p_2$ are not affected. The lower end of the sub sleeve 12SB in the drawing serves as a cap portion 12c, and the cap portion 12c is screwed in the main sleeve 12SA, and contains a spring 12s in a contracted state between the cap portion 12c and the second spool $12p_2$.

The spool portion $12_4$ of the linear solenoid valve $10_4$ structured as described above is assembled by attaching the main sleeve 12SA to a solenoid portion 11 by caulking or the like, sequentially inserting the first spool $12p_1$ and the second spool $12p_2$ into a hollow portion of the main sleeve 12SA, fittingly inserting the sub sleeve 12SB around the second spool $12p_2$, and screwing the cap portion 12c in the main sleeve 12SA with the spring 12s inserted therein.

As described above, according to the linear solenoid valve $10_4$ of the fourth embodiment, the spool is separated and formed into the first spool $12p_1$ that is slidably supported by the main sleeve 12SA, and the second spool $12p_2$ that is slidably supported by the sub sleeve 12SB. Thus, the displacement of the centers due to a fitting error, a product error, or the like between the main sleeve 12SA and the sub sleeve 12SB can be absorbed by the separated portion between the first spool $12p_1$ and the second spool $12p_2$, whereby especially the sealing capability between the sub sleeve 12SB and the second spool $12p_2$ can be satisfactorily ensured. Thus, even if the drain port EX needs to be additionally provided in the separate portion between the first spool $12p_1$ and the second spool $12p_2$, the overall length of the spool portion $12_4$ of the linear solenoid valve $10_4$ in the axial direction can be reduced, which can contribute to implementation of a more compact hydraulic control device 1 of the automatic transmission.

Note that since the structures, functions, and effects of the parts other than those described above are similar to the first to third embodiments, description thereof will be omitted.

(Fifth Embodiment)

A fifth embodiment, which is partially modified from the fourth embodiment, will be described below with reference to FIG. 8. Note that in the description of the fifth embodiment, the parts similar to those of the first to fourth embodiments are denoted with the same reference characters, and description thereof will be omitted.

A spool portion $12_5$ of a solenoid valve $10_5$ of the fifth embodiment is modified from the spool portion $12_4$ of the solenoid valve $10_4$ of the fourth embodiment in the structures of the second spool $12p_2$ and the sub sleeve 12SB and the position where the spring 12s is placed.

More specifically, as shown in FIG. 8, the spool portion $12_5$ of the linear solenoid valve $10_5$ of the fifth embodiment includes: a first spool $12p_1$ having a small-diameter land portion $12pr_1$, a large-diameter land portion $12pr_2$, and a large-diameter land portion $12pr_3$; a substantially columnar second spool $12p_2$; a cylindrical sub sleeve 12SB; and a man sleeve 12SA entirely containing these elements.

In the spool portion $12_5$ of the present embodiment, the outer diameter of the second spool $12p_2$ is set so that the cross-sectional area of the second spool $12p_2$ is equal to the difference in pressure-receiving area "A1 - A2" between the small-diameter land portion $12pr_1$ and the large-diameter land portion $12pr_2$ of the first spool $12p_1$, namely so that an oil pressure acting area of the first feedback oil chamber 12b and an oil pressure acting area of the second feedback oil chamber 12a are set equal to each other. In the spool portion $12_5$, the lower end of the sub sleeve 12SB in the drawing serves as a cap portion 12c, and the cap portion 12c is screwed in the main sleeve 12SA, and contains a spring 12s in a compressed state between the lower end of the first spool $12p_1$ in the drawing and the upper end of the sub sleeve 12SB in the drawing (that is, in the separated portion between the first spool $12p_1$ and the second spool $12p_2$).

The spool portion $12_5$ of the linear solenoid valve $10_5$ structured as described above is assembled by attaching the main sleeve 12SA to a solenoid portion 11 by caulking or the like, sequentially inserting the first spool $12p_1$ and the spring 12s into a hollow portion of the main sleeve 12SA, and inserting the sub sleeve 12SB, which has the second spool $12p_2$ inserted therein, into the main sleeve 12SA by screwing the cap portion 12c in the main sleeve 12SA.

As described above, according to the spool portion $12_5$ of the linear solenoid valve $10_5$ of the fifth embodiment, no land portion need be provided in the second spool $12p_2$, whereby the second spool $12p_2$ can be shortened, and thus the length of the spool portion $12_5$ in the axial direction can be reduced. Moreover, since the spring 12s is placed in the separated portion between the first spool $12p_1$ and the second spool $12p_2$, a drain port EX provided in the separated portion between the first spool $12p_1$ and the second spool $12p_2$ can be used also as a drain port EX for draining an oil pressure in a chamber in which the spring 12s is provided (see FIG. 7). Thus, the number of drain ports EX can be reduced by one, and the length of the spool portion $12_5$ in the axial direction can be reduced, which can contribute to implementation of a more compact hydraulic control device 1 of the automatic transmission.

Note that since the structures, functions, and effects of the parts other than those described above are similar to the first to fourth embodiments, description thereof will be omitted.

Note that the first to fifth embodiments are described with respect to examples in which the hydraulic control device 1 is used for the automatic speed change mechanism 40 of the structure in which the engine EG is mounted in the longitudinal direction with respect to the traveling direction of the vehicle as in the front-engine, rear-wheel drive (FR) type, as shown in FIG. 4. However, the present invention is not limited to this, and the hydraulic control device 1 may be used for automatic speed change mechanisms of the structure in which the engine EG is mounted in the transverse direction with respect to the traveling direction of the vehicle as in the front-engine, front-wheel-drive (FF) type. It is to be understood that the automatic speed change mechanism may be an automatic speed change mechanism of any type of automatic transmission such as a stepped automatic transmission and a belt type or toroidal type continuously variable transmission.

FIG. 4 is described with respect to an example that is used in the first embodiment. However, it is to be understood that the vehicle can be similarly structured in the second and third embodiments as well by placing the starting device and the hydraulic control device in a similar manner.

The embodiments of the present invention are described with respect to examples in which an internal combustion engine is used as a driving source. However, it is to be understood that the hydraulic control device of the automatic transmission of the present invention may also be applied to hybrid vehicles provided with a motor generator.

INDUSTRIAL APPLICABILITY

The hydraulic control device of the automatic transmission of the present invention can be used as a hydraulic control device of automatic transmissions that are mounted on passenger cars, trucks, or the like, and is especially preferable when used in automatic transmissions that are required to accurately perform engagement/disengagement control and slip control of a clutch for enabling and disabling power transmission between a driving source and an automatic speed change mechanism.

[Description of the Reference Numerals]

| | |
|---|---|
| $1_1$, $1_2$, $1_3$ | hydraulic control device of automatic transmission |
| 2 | starting device |
| 3 | clutch, lockup clutch |
| 4 | hydraulic power transmission device (torque converter) |
| 6 | circulation pressure supply portion (primary regulator valve) |
| 7 | circulation pressure supply portion (modulator valve) |
| 9 | circulation pressure supply portion (secondary regulator valve) |
| $10_1$ to $10_5$ | pressure-regulating solenoid valve (linear solenoid valve) |
| 11 | solenoid portion |
| $12_1$ to $12_5$ | spool portion |
| 12SA | main sleeve |
| 12SB | sub sleeve |
| 12a | second feedback oil chamber |
| 12b | first feedback oil chamber |
| 12p | spool |
| $12p_1$ | first spool |
| $12p_2$ | second spool |
| 12s | spring |
| 17 | circulation pressure supply portion (modulator valve) |
| 22 | starting device |
| 22c | working pressure supply port (lockup on port) |
| 22d | circulation pressure supply port (input port) |
| 22e | circulation pressure discharge port (discharge port) |
| 23 | clutch, lockup clutch |
| 27 | circulation pressure supply portion (modulator valve) |
| 32 | starting device |
| 32c | working pressure supply port (lockup on port) |
| 32d | circulation pressure supply port (input port) |
| 32e | circulation pressure discharge port (discharge port) |
| 33 | clutch (starting clutch) |
| 40 | automatic speed change mechanism |
| AT | automatic transmission |
| EG | driving source (engine) |
| $P_{CIR}$ | circulation pressure |
| $P_{APP}$ | working pressure |
| c4 | circulation pressure supply oil passage (oil passage) |
| c5 | circulation pressure introducing oil passage (oil passage) |
| d1 | circulation pressure discharge oil passage (oil passage) |
| e3 | circulation pressure supply oil passage (oil passage) |

**Claims**

1. A hydraulic control device of an automatic transmission, including: a circulation pressure supply portion for supplying a circulation pressure to a starting device having a clutch capable of enabling and disabling power transmission between a driving source and an automatic speed change mechanism; and a pressure-regulating solenoid valve capable of regulating a working pressure that engages and disengages the clutch by a difference from the circulation pressure, wherein the pressure-regulating solenoid valve has a solenoid portion that is driven electrically, and a spool portion including a spool that is drivingly pressed by the solenoid portion, the hydraulic control device **characterized in that**
the spool portion includes a first feedback oil chamber for feeding back the working pressure to the spool, and a second feedback oil chamber for feeding back the circulation pressure to the spool in a direction opposite to the first feedback oil chamber, and
a pressure-receiving area of the first feedback oil chamber and a pressure-receiving area of the second feedback oil chamber are set equal to each other in the spool.

2. The hydraulic control device of the automatic transmission according to claim 1, **characterized in that**
the starting device includes a hydraulic power transmission device for performing the power transmission between the driving source and the automatic speed change mechanism via a fluid, and
the clutch is a lockup clutch.

3. The hydraulic control device of the automatic transmission according to claim 1 or 2, **characterized by** further comprising:

   a circulation pressure supply oil passage for supplying the circulation pressure from the circulation pressure supply portion to a circulation pressure supply port of the starting device;
   a circulation pressure discharge oil passage for discharging the circulation pressure in the starting device from a circulation pressure discharge port of the starting device;
   a working pressure supply oil passage for supplying the working pressure from the pressure-regulating solenoid valve to a working pressure supply port of the starting device; and
   a circulation pressure introducing oil passage for introducing the circulation pressure into the second feedback oil chamber from one of the circulation pressure supply port and the circulation pressure discharge port that is located closer to the clutch.

4. The hydraulic control device of the automatic transmission according to any one of claims 1 to 3, **characterized in that**
the spool portion of the pressure-regulating solenoid valve has a main sleeve that entirely contains the spool and slidably supports at least one end of the spool, and a sub sleeve that is interposed between the main sleeve and the other end of the spool and slidably supports the other end of the spool, and
the spool is separated and formed into a first spool that is slidably supported by the main sleeve, and a second spool that is slidably supported by the sub sleeve.

5. The hydraulic control device of the automatic transmission according to any one of claims 1 to 4, **characterized in that**
the pressure-regulating solenoid valve includes a spring for biasing the spool against a driving force of the solenoid portion,
a relation of forces that are applied to the spool is represented by

$$P_{CIR} - P_{APP} = -(F_{SOL} - F_{SP})/(A1 - A2) = Pd,$$

where $P_{APP}$ represents the working pressure that is fed back to the first feedback oil chamber, $P_{CIR}$ represents the circulation pressure that is fed back to the second feedback oil chamber, $F_{SP}$ represents a biasing force of the spring that biases the spool in such a direction that reduces an amount of communication between an input port and an output port of the pressure-regulating solenoid valve, $F_{SOL}$ represents the driving force of the solenoid portion, and A1 - A2 represents the pressure-receiving area of the first feedback oil chamber and the second feedback oil chamber, and
in a state in which the driving force $F_{SOL}$ is constantly output, the difference Pd between the circulation pressure $P_{CIR}$ and the working pressure $P_{APP}$ is maintained constant even if the circulation pressure $P_{CIR}$ varies.

# F I G . 1

# F I G . 2

# F I G . 3

# FIG.4

EP 2 410 211 A1

# FIG.5

# FIG.6

# F I G . 7

# F I G . 8

# FIG.9

# F I G . 10

## INTERNATIONAL SEARCH REPORT

| | International application No. |
|---|---|
| | PCT/JP2010/005667 |

**A. CLASSIFICATION OF SUBJECT MATTER**
*F16H61/14*(2006.01)i, *F16K11/07*(2006.01)i, *F16K31/06*(2006.01)i

According to International Patent Classification (IPC) or to both national classification and IPC

**B. FIELDS SEARCHED**

Minimum documentation searched (classification system followed by classification symbols)
F16H61/14, F16K11/07, F16K31/06

Documentation searched other than minimum documentation to the extent that such documents are included in the fields searched
Jitsuyo Shinan Koho          1922-1996    Jitsuyo Shinan Toroku Koho    1996-2010
Kokai Jitsuyo Shinan Koho    1971-2010    Toroku Jitsuyo Shinan Koho    1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2001-116138 A  (Nissan Motor Co., Ltd.),<br>27 April 2001 (27.04.2001),<br>paragraphs [0001] to [0033]; fig. 1<br>& US 6374973 B1 | 1-5 |
| Y | JP 03-096758 A  (JATCO Ltd.),<br>22 April 1991 (22.04.1991),<br>specification, page 3, lower right column,<br>line 12 to page 7, lower right column, line 10<br>& US 5082095 A          & EP 417666 A1<br>& DE 69015069 T2        & KR 10-1994-0001731 B1 | 1-5 |
| Y | JP 08-014381 A  (Nissan Motor Co., Ltd.),<br>16 January 1996 (16.01.1996),<br>paragraphs [0015] to [0036]<br>(Family: none) | 4-5 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>02 December, 2010 (02.12.10) | Date of mailing of the international search report<br>14 December, 2010 (14.12.10) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 410 211 A1**

| INTERNATIONAL SEARCH REPORT | International application No. |
|---|---|
| | PCT/JP2010/005667 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 62-233559 A  (Aisin-Warner Ltd.), 13 October 1987 (13.10.1987), specification, page 8, lower right column, line 7 to page 11, lower right column, line 2; fig. 1 to 6 (Family: none) | 1-5 |

Form PCT/ISA/210 (continuation of second sheet) (July 2009)

26

**EP 2 410 211 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006242347 A